# EUROPÄISCHE PATENTSCHRIFT

(11) **EP 1 690 032 B1**
(45) Veröffentlichungstag und Bekanntmachung des Hinweises auf die Patenterteilung: **31.12.2008**
(21) Anmeldenummer: 04790144.2
(22) Anmeldetag: 06.10.2004
(51) Int. Cl.: F16L 37/098

(54) **VORRICHTUNG ZUM ABGEDICHTETEN VERBINDEN VON ZWEI ENDSTÜCKEN**
DEVICE FOR SEALINGLY LINKING TWO END PIECES
DISPOSITIF DE CONNEXION ETANCHE DE DEUX EMBOUTS

(30) Priorität: 27.11.2003 DE 10355535
(43) Veröffentlichungstag der Anmeldung: 16.08.2006
(73) Patentinhaber: A. RAYMOND ET CIE, 38000 Grenoble (FR)
(72) Erfinder: FEGER, Axel, 79540 Lörrach (DE); TREDE, Michael, F-68440 Habsheim (FR)
(74) Vertreter: Rüttgers, Joachim
(86) Internationale Anmeldenummer: PCT/EP2004/011152
(87) Internationale Veröffentlichungsnummer: WO 2005/061942

(56) Entgegenhaltungen:
- EP-A- 0 806 597
- WO-A-00/79172
- WO-A-99/45306
- US-A- 5 472 016
- US-A1- 2003 160 448

## Beschreibung

Die Erfindung betrifft eine Vorrichtung zum abgedichteten Verbinden von zwei Endstücken einer Fluidleitungsanordnung mit einem Mantelteil, in das die Endstücke einfügbar sind, mit einem Innenteil, das über einen ersten Einführbereich in das Mantelteil einführbar ist, und mit einer Dichteinheit, die von dem Mantelteil umgeben und zum gegenseitigen Abdichten der Endstücke eingerichtet ist.

Eine derartige Vorrichtung ist aus der EP 0 806 597 A1 bekannt. Die zum Verbinden von zwei Endstücken einer Fluidleitungsanordnung vorgesehene vorbekannte Vorrichtung verfügt über ein Mantelteil, in das ein Innenteil sowie ein als Dichteinheit dienender loser Dichtring einführbar ist. Beim Einfügen eines mit einem endseitigen Abschlussflansch ausgebildeten ersten Endstückes über einen ersten Einführbereich werden Längszungen des Mantelteils nach außen gedrückt, und der lose Dichtring kommt zwischen dem Abschlussflansch und einer Stirnseite des Innenteils zum Liegen, wobei der Abschlussflansch zwischen einem nach innen weisenden Innenwulst des Mantelteils und einem nach außen weisenden Ringbund des Innenteils angeordnet ist. In dieser Anordnung des ersten Endstückes ist das Innenteil fixiert, wobei zum Verhindern eines unbeabsichtigten Herausrutschens des ersten Endstückes im ersten Einführbereich ein Sicherungsring um die Längszungen aufgeschoben ist.

Das Innenteil weist zwei federnde und mit nach außen abstehenden Nasen ausgebildete Arme auf, die bei Einfügen eines mit einer Ringwulst ausgebildeten zweiten Endstückes in einen zweiten Einführbereich mit der Ringwulst in Eingriff kommen. An dem Mantelteil sind Haltefinger ausgebildet, die bei bestimmungsgemäßer Anordnung des mit der Ringwulst ausgebildeten Endstückes die Ringwulst hintergreifen und das zweite Endstück fixieren. In dieser Stellung stehen die Nasen über die Außenseite des Mantelteils über und zeigen dadurch die bestimmungsgemäße Anordnung des zweiten Endstückes an. Zwar ist bei der vorbekannten Vorrichtung durch das Vorsehen der Nasen leicht erkennbar, ob das zweite Endstück ordnungsgemäß angeordnet ist, allerdings ist das Verbinden der Endstücke verhältnismäßig umständlich.

Der Erfindung liegt die Aufgabe zugrunde, eine Vorrichtung der eingangs genannten Art anzugeben, die sich durch ein verhältnismäßig einfaches sowie betriebssicheres Verbinden der Endstücke auszeichnet und bei der insbesondere auch die Gefahr des Verlustes der Dichteinheit so gut wie ausgeschlossen ist.

Diese Aufgabe wird bei einer Vorrichtung der eingangs genannten Art erfindungsgemäß dadurch gelöst, dass das Innenteil in dem Mantelteil axial verschiebbar gelagert und über den ersten Einführbereich ausführbar ist, dass die Dichteinheit in einem zweiten Einführbereich des Mantelteils mit einer an dem Innenteil ausgebildeten Haltestruktur von dem Innenteil lösbar fixierbar ist, dass in dem Mantelteil zwischen dem ersten Einführbereich und dem zweiten Einführbereich ein Widerlager ausgebildet ist, mit dem die Dichteinheit ausgehend von einer von dem Innenteil fixierten Anordnung bei einer axialen Bewegung des Innenteils von dem zweiten Einführbereich in Richtung des ersten Einführbereiches in Eingriff kommt, und dass das Innenteil eine Kontaktfläche aufweist, die bei Einführen eines Endstückes in den zweiten Einführbereich mit diesem Endstück in Eingriff kommt, so dass sich das Innenteil unter Freigabe der Dichteinheit in Richtung des ersten Einführbereiches verschiebt und aus dem Mantelteil entfernbar ist.

Dadurch, dass bei der erfindungsgemäßen Vorrichtung ein Innenteil vorhanden ist, mit dem zum einen die Dichteinheit bis zum Einfügen eines Endstückes gehalten wird und das zum anderen nach Einfügen eines Endstückes sowie nach Freigabe der Dichteinheit über den Eingriff mit dem Widerlager als Anzeige für ein ordnungsgemäßes Einfügen des mit ihm in Eingriff kommenden Endstückes dient, lassen sich mit der erfindungsgemäßen Vorrichtung mit sehr wenigen Handgriffen und insbesondere ohne die Notwendigkeit des Handhabens von zusätzlichen losen Teilen der Dichteinheit wie beispielsweise ein Dichtring die Endstücke betriebssicher miteinander verbinden.

Weitere zweckmäßige Ausgestaltungen und Vorteile der Erfindung sind Gegenstand der Unteransprüche sowie der nachfolgenden Beschreibung eines Ausführungsbeispiels der Erfindung mit Bezug auf die Figuren der Zeichnung Es zeigen:
- Fig. 1: in einer perspektivischen teilgeschnittenen Ansicht ein Ausführungsbeispiel einer erfindungsgemäßen Vorrichtung mit einem innerhalb eines Mantelteils angeordneten und eine Dichteinheit fixierenden Innenteil,
- Fig. 2: in einer perspektivischen teilgeschnittenen Ansicht das Ausführungsbeispiel gemäß Fig. 1 mit einem teilweise in das Mantelteil eingefügten Endstück einer Fluidleitungsanordnung und
- Fig. 3: in einer perspektivischen teilgeschnittenen Ansicht das Ausführungsbeispiel gemäß Fig. 1 und Fig. 2 mit dem vollständig in das Mantelteil eingefügten Endstück der Fluidleitungsanordnung.

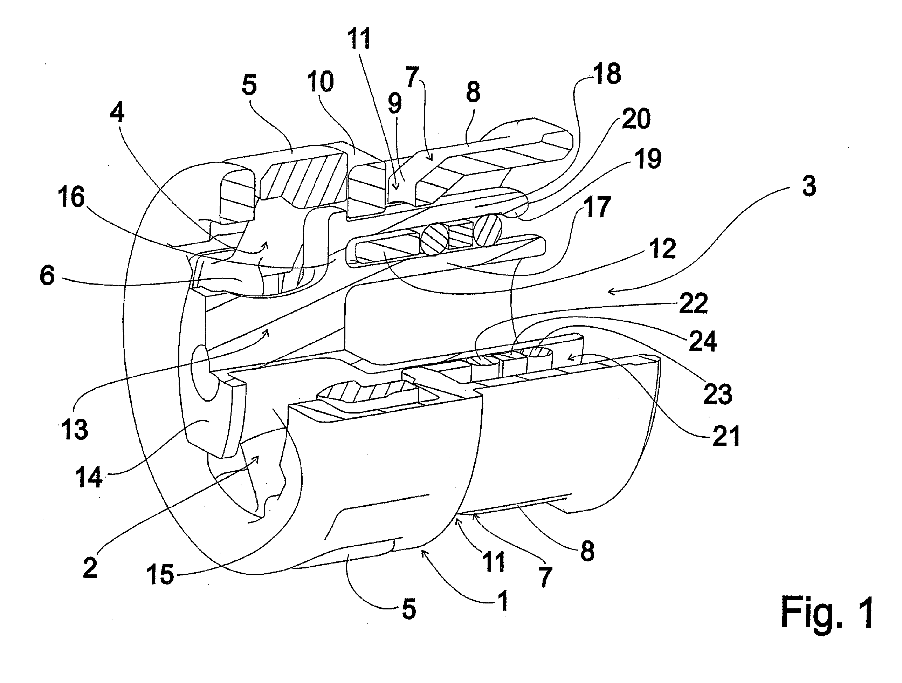

Fig. 1 zeigt in einer perspektivischen teilgeschnittenen Ansicht ein Ausführungsbeispiel einer erfindungsgemäßen Vorrichtung mit einem im wesentlichen zylinderförmig ausgebildeten Mantelteil 1, das in axialer Richtung einen ersten Einführbereich 2 und einen zweiten Einführbereich 3 aufweist, die einander gegenüberliegend angeordnet sind.

Im ersten Einführbereich 2 verfügt das Ausführungsbeispiel gemäß Fig. 1 über eine ringförmige Sicherungsfeder 4, die in einer entsprechend angepassten Ausnehmung des Mantelteils 1 angeordnet ist. Die Sicherungsfeder 4 verfügt über freiliegende Druckbereiche 5, über die bei Beaufschlagen mit nach innen gerichteten, von Hand aufgewendeten Druckkräften innerhalb des Mantelteils 1 liegende Sicherungsvorsprünge 6 in innerhalb des Mantelteils 1 ausgebildete Rückzugsausnehmungen verschiebbar sind.

Im zweiten Einführbereich 3 sind an dem Mantelteil 1 bei diesem Ausführungsbeispiel wenigstens zwei elastische Federnasen 7 ausgebildet, die einen im wesentlichen axial verlaufenden Parallelabschnitt 8 und einen nach innen abgewinkelten Rastabschnitt 9 aufweisen. Zwischen dem Rastabschnitt 9 und einer innenseitig an der Sicherungsfeder 4 angrenzenden Innenschulter 10 ist eine Rastnut 11 ausgebildet. Im Bereich der Innenschulter 10 und der Rastnut 11 verfügt das Mantelteil 1 über ein eine Anzahl von als Widerlager dienenden und auf einer Kreisumfangslinie liegenden Innenringabschnitten 12, die in einem radialen Abstand innenseitig der Innenschulter 10 und der Rastnut 11 angeordnet sind. In einer nicht dargestellten, insbesondere für verhältnismäßig kleine Innendurchmesser vorgesehenen Abwandlung sind radial ausgerichtete Rastabschnitte vorgesehen.

Weiterhin verfügt das Ausführungsbeispiel gemäß Fig. 1 über ein Innenteil 13, das in der Darstellung gemäß Fig. 1 innerhalb des Mantelteils 1 angeordnet ist. Das Innenteil 13 verfügt bei dem dargestellten Ausführungsbeispiel über eine Stirnplatte 14, ein sich an die Stirnplatte 14 anschließendes Halsstück 15 mit einem gegenüber dem Durchmesser der Stirnplatte 14 kleineren Durchmesser und eine an der der Stirnplatte 14 gegenüberliegenden Seite des Halsstückes 15 angesetzten Zwischenplatte 16. An der dem Halsstück 15 gegenüberliegenden Seite der Zwischenplatte 16 ist als Innenabschnitt eine zylinderförmige Innenhülse 17 ausgebildet, deren Außendurchmesser kleiner als der Innendurchmesser der Innenringabschnitte 12 ist. Weiterhin verfügt das Innenteil 13 über wenigstens zwei federnde Außenklammern 18, die jeweils mit einem innenseitigen Ende mit der Zwischenplatte 16 verbunden und an einem außenseitigen Ende mit nach innen weisenden Endvorsprüngen 19 als Haltestruktur sowie einer stirnseitigen Kontaktfläche 20 ausgebildet sind. Bei dem in Fig. 1 dargestellten Ausführungsbeispiel steht die Innenhülse 17 in axialer Richtung über die Kontaktflächen 20 vor.

Schließlich verfügt die erfindungsgemäße Vorrichtung über eine Dichteinheit 21, die bei dem Ausführungsbeispiel gemäß Fig. 1 einen der Zwischenplatte 16 benachbarten innenseitigen kreisförmigen ersten Dichtring 22, einen dem freien Ende des Innenteils 13 zugewandten außenseitigen kreisförmigen zweiten Dichtring 23 und einen zwischen dem ersten Dichtring 22 und dem zweiten Dichtring 23 angeordneten kreisförmigen Zwischenring 24 aufweist. Die Dichtringe 22, 23 sind aus einem elastischen Material hergestellt und weisen einen rundlichen Querschnitt auf, während der Zwischenring 24 aus einem steifen Material und mit einem rechteckigen Querschnitt ist. Die Dimension des Zwischenringes 24 in radialer Richtung ist etwas kleiner als der Durchmesser der Dichtringe 22, 23.

In der Anordnung gemäß Fig. 1 sind die Dichtringe 22, 23 und der Zwischenring 24 auf der dem zweiten Einführbereich 3 zugewandten Seite der Innenringabschnitte 12 angeordnet und liegen innenseitig an der Innenhülse 17 an, während sie außenseitig von den Außenklammern 18 umgeben sind. Aus Fig. 1 ist ersichtlich, dass die Endvorsprünge 19 den Freiraum zwischen der Innenhülse 17 und den Außenklammern 18 etwas einengen, so dass die Dichtringe 22, 23 und der Zwischenring 24 bei Anordnung zwischen der Innenhülse 17 und den Außenklammern 18 durch das Innenteil 13 lösbar fixiert sind.

Die Anordnung gemäß Fig. 1 zeigt die applikationsbereite Konfiguration des dargestellten Ausführungsbeispiels. Diese Konfiguration wird üblicherweise herstellerseiting bereitgestellt, indem das Innenteil 13 in den ersten Einführbereich 2 eingeführt wird, bis unter Durchführen der Innenhülse 17 innerhalb der Innenringabschnitte 12 und der Außenklammern 18 durch die zwischen den Innenringabschnitten 12 ausgebildeten Ausnehmungen die Zwischenplatte 16 an den Innenringabschnitten 12 des Mantelteils 1 anliegt. In dieser Stellung schließt im übrigen vorteilhafterweise die Stirnplatte 14 mit der Stirnseite des Mantelteils 1 im ersten Einführbereich 2 ab oder tritt sogar hinter diese zurück.

Weiterhin werden in dieser Stellung nunmehr über den zweiten Einführbereich 3 des Mantelteils 1 der erste Dichtring 22, der Zwischenring 24 und der zweite Dichtring 23 durch die endseitige Engstelle zwischen der Innenhülse 17 und den Endvorsprüngen 19 zwischen die Innenhülse 17 und die Außenklammern 18 eingeführt, wobei auch hier die Innenringabschnitte 12 nunmehr für die Dichteinheit 21 einen Anschlag bilden. Die erfindungsgemäße Vorrichtung ist nunmehr anwendungsbereit vorkonfektioniert, wobei alle Einzelteile, nämlich das Mantelteil 1, das Innenteil 13 und die Dichteinheit 21, lose miteinander verbunden sind und insbesondere die Dichteinheit 21 gegen Vertieren gesichert ist.

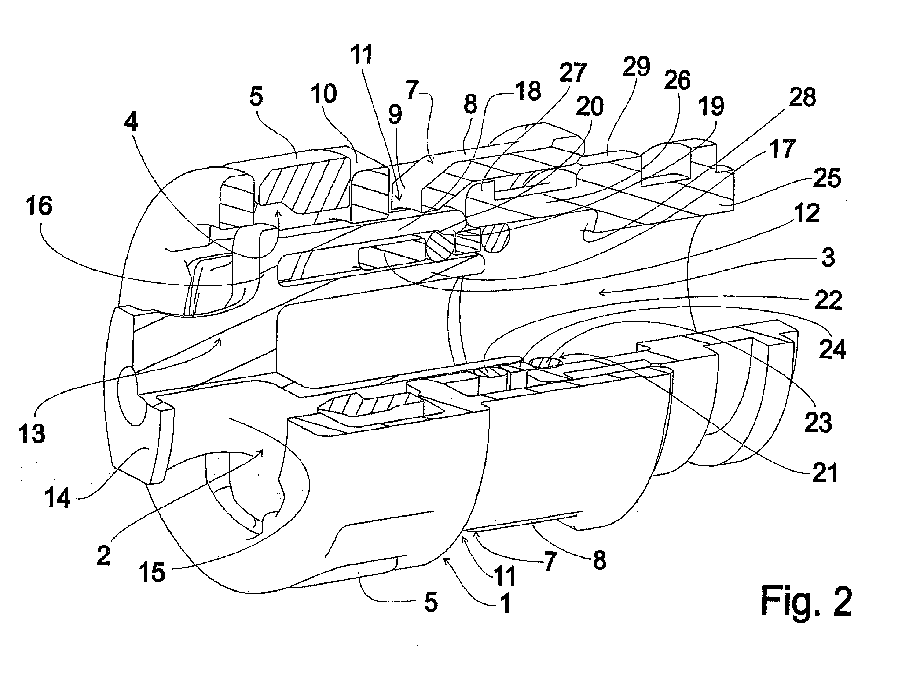

Fig. 2 zeigt in einer perspektivischen teilgeschnittenen Ansicht das Ausführungsbeispiel gemäß Fig. 1 mit einem in den zweiten Einführbereich 3 des Mantelteils 1 eingeführten und teilweise eingefügten Endstück 25 einer Fluidleitungsanordnung. Beispielsweise ist das Endstück 25 Teil eines feststehenden Stutzens eines Tanks, an den eine Rohrleitung anzuschließen ist. Das Endstück 25 verfügt an seinem freien Ende über einen Zylinderabschnitt 26, an dessen vorderen Ende ein umlaufender, radial nach außen überstehender Ringflansch 27 ausgebildet ist. In einem Abstand von dem Ringflansch 27 weist das Endstück 25 radial innenseitig eine in etwa radial ausgerichtet ringförmige Aufnahmefläche 28 auf, deren Oberflächenkontur in etwa der Außenfläche des zweiten Dichtringes 23 entspricht. Ebenfalls in einem Abstand von dem Ringflansch 27 ist das Endstück 25 mit einer zylinderförmigen Führungsfläche 29 ausgebildet, deren Außendurchmesser im wesentlichen dem Innendurchmesser des Mantelteils 1 im Bereich der Parallelabschnitte 8 entspricht.

In der eine Zwischenstellung beim Verrasten des Endstückes 25 mit dem Mantelteil 1 bildenden Anordnung gemäß Fig. 2 wurde das Endstück 25 bereits soweit eingefügt, dass die Stirnseite des Endstückes 25 unter Anliegen an der Kontaktfläche 20 der Außenklammen 18 das Innenteil 13 soweit in Richtung des ersten Einführbereichs 2 verschoben hat, dass sich nach Anliegen des ersten Dichtringes 21 an den in diesem Ausführungsbeispiel das Widerlager bildenden Innenringabschnitten 12 der zweite Dichtring 23 vollständig von dem Innenteil 13 gelöst hat und der Zwischenring 24 bereits die Engstelle bei den Endvorsprüngen 19 passiert hat, jedoch noch um die Innenhülse 17 angeordnet ist. Der Überstand der Stirnplatte 14 über die in dem ersten Einführbereich 2 gelegene Stirnseite des Mantelteils 1 zeigt bei diesem Ausführungsbeispiel während des Einfügevorganges die Relativstellung des Endstückes 25 in Bezug auf das Mantelteil 1 an.

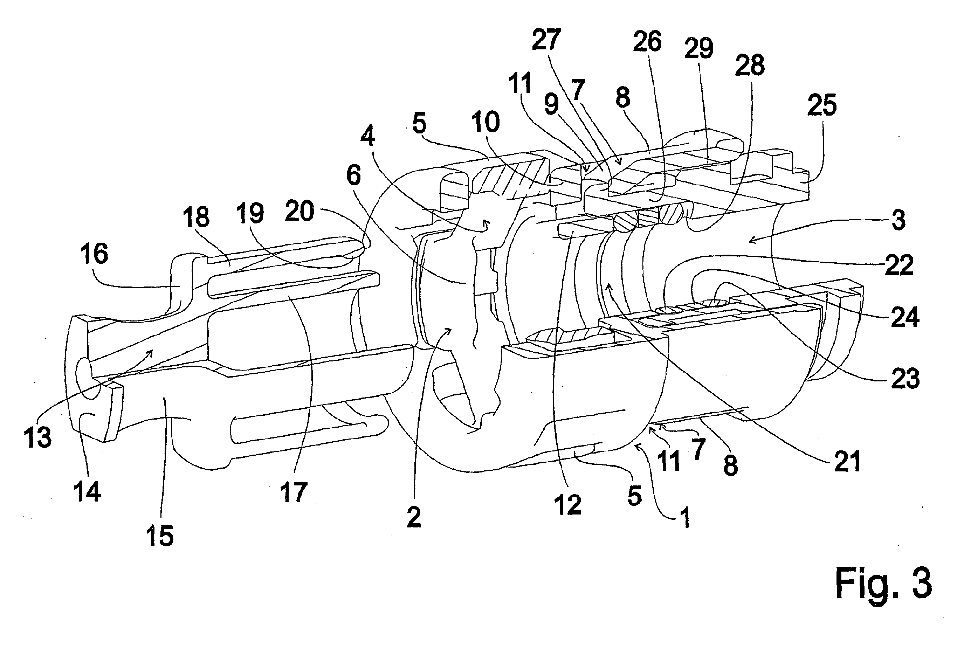

Fig. 3 zeigt in einer perspektivischen teilgeschnittenen Ansicht das Ausführungsbeispiel gemäß Fig. 1 und Fig. 2 mit dem vollständig in das Mantelteil 1 eingefügten und in Endstellung befindlichen Endstück 25. Aus Fig. 3 ist ersichtlich, dass in dieser Anordnung des Endstückes 25 der Ringflansch 27 innerhalb der Rastnut 11 angeordnet ist, die Rastabschnitte 9 den Ringflansch 27 hintergreifen und die Führungsfläche 29 im Bereich der Parallelabschnitte 8 liegt, so dass das Endstück 25 nunmehr mit dem Mantelteil 1 im wesentlichen spielfrei verrastet ist. Die Dichtringe 22, 23 und der Zwischenring 24 der Dichteinheit 21 sind mit einem kleinen axialen Spiel zwischen den Innenringabschnitten 12 des Mantelteils 1 und der Aufnahmefläche 28 des Endstückes 25 angeordnet. Das Innenteil 13 wurde bereits über den ersten Einführbereich 2 beilspielsweise durch Ergreifen an dem Halsstück 15 aus dem Mantelteil 1 ausgeführt, wobei nach Verrasten des Endstückes 25 mit dem Mantelteil 1 die Zwischenplatte 16 in etwa bündig mit der in dem ersten Einführbereich 2 liegenden Stirnseite des Mantelteils 1 ausgerichtet war, um das ordnungsgemäße Einnehmen der Endstellung des Endstückes 25 mit dem Mantelteil 1 anzuzeigen.

Nunmehr ist nach Entfernen des Innenteils 13 aus dem Mantelteil 1 ein in den Figuren nicht dargestelltes weiteres Endstück beispielsweise einer flexiblen Fluidleitung in an sich bekannter Art und Weise in den ersten Einführbereich 2 des Mantelteils 1, durch die Innenringabschnitte 12 hindurch und in die Dichteinheit 21 einfügbar, bis die Sicherungsvorsprünge 6 der Sicherungsfeder 4 einen an dem weiteren Endstück endseitig ausgebildeten umfänglichen Sicherungsvorsprung hintergreifen, so dass das weitere Endstück mit dem Mantelteil 1 lösbar verrastet ist. In dieser Anordnung liegt ein zylinderförmiger Dichtabschnitt des weiteren Endstückes innenseitig an den Dichtringen 22, 23 an, so dass das Endstück 25 und das weitere Endstück abgedichtet miteinander verbunden sind.

Bei einem nicht dargestellten, gegenüber dem Ausführungsbeispiel gemäß Fig. 1 abgewandelten weiteren Ausführungsbeispiel einer erfindungsgemäßen Vorrichtung weist das Innenteil 13 eine Stirnplatte 14 auf, an der die Innenhülse 17 und die Außenklammern 18 direkt angesetzt sind. Bei diesem abgewandelten Ausführungsbeispiel sind die axialen Dimensionen des Mantelteils 1 und des Innenteils 13 so eingerichtet, dass die Stirnplatte 14 erst dann über die Stirnseite des Mantelteils 1 im Bereich des ersten Einführbereiches 2 vorsteht, wenn das Endstück 25 mit dem Mantelteil 1 verrastet ist. Auf diese Weise kann das Innenteil 13 erst dann zum vollständigen Entfernen ergriffen werden, wenn der Einfügevorgang vollständig abgeschlossen ist.

Bei einem weiteren nicht dargestellten, gegenüber dem Ausführungsbeispiel gemäß Fig. 1 abgewandelten Ausführungsbeispiel ist die Länge des Halsstückes 15 so eingerichtet, dass die Stirnplatte 14 erst bei Verrasten des Endstückes 25 mit dem Mantelteil 1 über die Stirnseite des Mantelteils 1 im Bereich des ersten Einführbereiches 2 vorsteht. Auf diese Weise kann auch hier das Innenteil 13 erst dann zum vollständigen Entfernen ergriffe werden, wenn der Einfügevorgang vollständig abgeschlossen ist.

Bei den vorgenannten Ausführungsbeispielen ist es zweckmäßig, dass die Stirnplatte 14 den Querschnitt des Mantelteils 1 im ersten Einführbereich 2 vollständig ausfüllt.

Bei einer weiteren Abwandlung des Ausführungsbeispiels gemäß Fig. 1 sind die Länge des Halsstückes 15 und der Durchmesser der Stirnplatte 14 so eingerichtet, dass die Stirnplatte 14 auf der Stirnseite des Mantelteils 1 im ersten Einführbereich 2 aufliegt.

## Patentansprüche

1. Vorrichtung zum abgedichteten Verbinden von zwei Endstücken einer Fluidleitungsanordnung mit einem Mantelteil (1), in das die Endstücke einfügbar sind, mit einem Innenteil (13), das über einen ersten Einführbereich (2) in das Mantelteil (1) einführbar ist, und mit einer Dichteinheit (21), die von dem Mantelteil (1) umgeben und zum gegenseitigen Abdichten der Endstücke eingerichtet ist, **dadurch gekennzeichnet, dass** das Innenteil (13) in dem Mantelteil (1) axial verschiebbar gelagert und über den ersten Einführbereich (2) ausführbar ist, dass die Dichteinheit (21) in einem zweiten Einführbereich (3) des Mantelteils (1) mit einer an dem Innenteil (13) ausgebildeten Haltestruktur (19) von dem Innenteil (13) lösbar fixierbar ist, dass in dem Mantelteil (1) zwischen dem ersten Einführbereich (2) und dem zweiten Einführbereich (3) ein Widerlager (12) ausgebildet ist, mit dem die Dichteinheit (21) ausgehend von einer von dem Innenteil (13) fixierten Anordnung bei einer axialen Bewegung des Innenteils (13) von dem zweiten Einführbereich (3) in Richtung des ersten Einführbereiches (2) in Eingriff kommt, und dass das Innenteil (13) eine Kontaktfläche (20) aufweist, die bei Einführen eines Endstückes (25) in den zweiten Einführbereich (3) mit diesem Endstück (25) in Eingriff kommt, so dass sich das Innenteil (13) unter Freigabe der Dichteinheit (21) in Richtung des ersten Einführbereiches (2) verschiebt und aus dem Mantelteil (1) entfernbar ist.

2. Vorrichtung nach Anspruch 1, **dadurch gekennzeichnet, dass** die Dichteinheit (21) wenigstens einen kreisförmigen Dichtring (22, 23) aufweist.

3. Vorrichtung nach Anspruch 2, **dadurch gekennzeichnet, dass** das Innenteil (13) im Bereich der Haltestruktur (19) einen zylinderförmigen Innenabschnitt (17) aufweist, der zum Lagern der Dichteinheit (21) durch den oder jeden Dichtring (22, 23) der Dichteinheit (21) durchführbar ist und an dem der oder jeder Dichtring (22, 23) lose anliegt.

4. Vorrichtung nach Anspruch 2 oder Anspruch 3, **dadurch gekennzeichnet, dass** das Innenteil (13) wenigstens zwei sich gegenüberliegende Außenklammern (18) aufweist, die zum Fixieren der Dichteinheit (21) den oder jeden Dichtring (22, 23) der Dichteinheit (21) umgeben.

5. Vorrichtung nach Anspruch 3 oder Anspruch 4, **dadurch gekennzeichnet, dass** die Haltestruktur Vorsprünge (19) aufweist, die an dem Innenabschnitt (17) und/oder den Außenklammern (18) des Innenteils (13) ausgebildet sind.

6. Vorrichtung nach Anspruch 3 und Anspruch 4 oder nach Anspruch 5, **dadurch gekennzeichnet, dass** der Innenabschnitt (17) über die Außenklammern (18) vorsteht.

7. Vorrichtung nach einem der Ansprüche 1 bis 6, **dadurch gekennzeichnet, dass** das Widerlager Ringabschnitte (12) aufweist, die auf einem Kreisumfang liegen, dessen Durchmesser dem Durchmesser des den Ringabschnitten (12) benachbarten Dichtringes (22) entspricht.

8. Vorrichtung nach Anspruch 7, **dadurch gekennzeichnet, dass** bei Anordnung des Innenteils (13) innerhalb des Mantelteils (1) die Außenklammern (18) durch zwischen den Ringabschnitten (12) ausgebildete Ausnehmungen durchgreifen.

9. Vorrichtung nach einem der Ansprüche 1 bis 8, **dadurch gekennzeichnet, dass** das Innenteil (13) eine Stirnplatte (14) aufweist, die bei die Dichteinheit (21) fixierender Anordnung des Innenteils (13) innerhalb des Mantelteils (1) angeordnet ist.

10. Vorrichtung nach Anspruch 9, **dadurch gekennzeichnet, dass** die Stirnplatte (14) bei in dem zweiten Einführbereich (3) eingeschobenem Endstück (25) über eine in dem ersten Einführbereich (2) liegende Stirnseite des Mantelteils (1) vorsteht.

11. Vorrichtung nach Anspruch 9, dass die Stirnplatte (14) bis zum Erreichen der Endstellung des Endstückes (25) zum Verbinden mit dem anderen Endstück hinter einer in dem ersten Einführbereich (2) liegenden Stirnseite des Mantelteils (1) angeordnet ist und bei Erreichen der Endstellung über die Stirnseite vorsteht.

## Claims

1. Device for sealed connection of two end pieces of a fluid line arrangement, comprising a casing part (1) into which the end pieces can be inserted, comprising an inner part (13) which can be inserted over a first insertion region (2) into the casing part (1), and comprising a sealing unit (21) which is surrounded by the casing part (1) and is designed for mutual sealing of the end pieces, **characterized in that** the inner part (13) is mounted in an axially displaceable manner in the casing part (1) and can be pulled out over the first insertion region (2), **in that** the sealing unit (21) can be detachably fixed by the inner part (13) in a second insertion region (3) of the casing part (1) with a retaining structure (19) formed on the inner part (13), **in that** an abutment (12) is formed in the casing part (1) between the first insertion region (2) and the second insertion region (3), with which abutment (12) the sealing unit (21) engages, starting from an arrangement fixed by the inner part (13), in the case of an axial movement of the inner part (13) from the second insertion region (3) in the direction of the first insertion region (2), and **in that** the inner part (13) has a contact surface (20) which, on insertion of an end piece (25) into the second insertion region (3), engages this end piece (25) so that the inner part (13) moves in the direction of the first insertion region (2) with release of the sealing unit (21) and can be removed from the casing part (1).

2. Device according to Claim 1, **characterized in that** the sealing unit (21) has at least one circular sealing ring (22, 23).

3. Device according to Claim 2, **characterized in that** the inner part (13) has, in the region of the retaining structure (19), a cylindrical inner section (17) which can be passed through the or each sealing ring (22, 23) of the sealing unit (21) for mounting the sealing unit (21) and against which the or each sealing ring (22, 23) rests loosely.

4. Device according to Claim 2 or Claim 3,
**characterized in that** the inner part (13) has two outer clamps (18) which are opposite one another and surround the or each sealing ring (22, 23) of the sealing unit (21) for fixing the sealing unit (21).

5. Device according to Claim 3 or Claim 4, **characterized in that** the retaining structure has projections (19) which are formed on the inner section (17) and/or the outer clamps (18) of the inner part (13).

6. Device according to Claim 3 and Claim 4 or according to Claim 5, **characterized in that** the inner section (17) projects beyond the outer clamps (18).

7. Device according to any of Claims 1 to 6, **characterized in that** the abutment has ring sections (12) which rest on the circumference of a circle whose diameter corresponds to the diameter of the sealing ring (22) adjacent to the ring sections (12).

8. Device according to Claim 7, **characterized in that,** when the inner part (13) is arranged inside the casing part (1), the outer clamps (18) pass through recesses formed between the ring sections (12).

9. Device according to any of Claims 1 to 8, **characterized in that** the inner part (13) has an end plate (14) which is arranged within the casing part (1) when the inner part (13) is arranged so as to fix the sealing unit (21).

10. Device according to Claim 9, **characterized in that,** when end piece (25) is pushed into the second insertion region (3), the end plate (14) projects beyond an end face of the casing part (1) which lies in the first insertion region (2).

11. Device according to Claim 9, **characterized in that,** before reaching the end position of the end piece (25) for connection to the other end piece, the end plate (14) is arranged behind an end face of the casing part (1) lying in the first insertion region (2) and projects beyond the end face on reaching the end position.

## Revendications

1. Dispositif servant à raccorder de manière étanche deux embouts d'un agencement de conduite véhiculant du fluide, comprenant un élément formant enveloppe (1) dans lequel les embouts sont destinés à être emmanchés, comprenant un élément intérieur (13) qui est destiné à être inséré dans l'élément formant enveloppe par l'intermédiaire d'une première zone d'introduction (2) et comprenant un agencement d'étanchéité (21) qui est entouré par l'élément formant enveloppe (1) et qui est agencé pour assurer l'étanchéité réciproque des embouts, **caractérisé en ce que** l'élément intérieur (13) est monté dans l'élément formant enveloppe (1) avec la possibilité de coulisser dans le plan axial et qu'il est destiné à être emmanché par l'intermédiaire de la première zone d'introduction (2), **en ce que** l'agencement d'étanchéité (21) est destiné à être fixé en position, de manière amovible, depuis l'élément intérieur (13), dans une deuxième zone d'introduction (3) de l'élément formant enveloppe (1) au moyen d'une structure de retenue (19) prévue à cet effet sur l'élément intérieur (13), **en ce qu'**il est prévu dans l'élément formant enveloppe (1), entre la première zone d'introduction (1) et la deuxième zone d'introduction (2), une butée (12), avec laquelle l'agencement d'étanchéité (21) vient, partant d'une position d'immobilisation déterminée par l'élément intérieur (13), lors d'un déplacement dans le plan axial de l'élément intérieur (13) de la deuxième zone d'introduction (3) dans la direction de la première zone d'introduction (2), en prise d'engagement, et **en ce que** l'élément intérieur (13) comporte une surface de contact (20) qui, lors de l'emmanchement d'un embout (25) dans la deuxième zone d'introduction (3), vient en prise d'engagement avec cet embout (25), de telle sorte que l'élément intérieur (13) coulisse dans la direction de la première zone d'introduction (2), en libérant l'agencement d'étanchéité (21), et peut être retiré de l'élément formant enveloppe (1).

2. Dispositif selon la revendication 1, **caractérisé en ce que** l'agencement d'étanchéité (21) comporte au moins une bague d'étanchéité de forme circulaire (22, 23).

3. Dispositif selon la revendication 2, **caractérisé en ce que** l'élément intérieur (1) comporte, dans la zone correspondant à la structure de retenue (19), une portion intérieure de forme cylindrique (17) qui, pour loger l'agencement d'étanchéité (21), peut être traversée par la ou par chaque bague d'étanchéité (22, 23) de l'agencement d'étanchéité et est en contact d'application de manière lâche contra la ou chaque bague d'étanchéité (22, 23).

4. Dispositif selon la revendication 2 ou la revendication 3, **caractérisé en ce que** l'élément intérieur (13) comporte au moins deux agrafes extérieures (18) à disposition respectivement opposée, qui enserrent la ou chaque bague d'étanchéité (22, 23) de l'agencement d'étanchéité (21) pour immobiliser en position d'agencement d'étanchéité (21).

5. Dispositif selon la revendication 3 ou la revendication 4, **caractérisé en ce que** la structure de retenue comporte des saillies (19), qui dont partie intégrante de la portion intérieure (17) et, ou encore, des agrafes extérieures (18) de l'élément intérieur (13).

6. Dispositif selon la revendication 3 ou la revendication 4, **caractérisé en ce que** la portion intérieure (17) fait saillie au-dessus des agrafes extérieures (18).

7. Dispositif selon l'une des revendications 1 à 6, **caractérisé en ce que** la butée comporte des portions annulaires (12), qui se situent sur la circonférence d'un cercle, dont le diamètre correspond au diamètre de la bague d'étanchéité (22) voisine des portions annulaires (12).

8. Dispositif selon la revendication 7, **caractérisé en ce que,** lorsque l'élément intérieur (13) est monté à l'intérieur de l'élément formant enveloppe (1), les agrafes extérieures (18) viennent s'engager en prise dans des évidements ménagés entre les portions annulaires (12).

9. Dispositif selon l'une des revendications 1 à 8, **caractérisé en ce que** l'élément intérieur (13) est muni d'une plaque frontale (14) qui, lorsque l'élément intérieur (13) se trouve dans sa position d'immobilisation en position de l'agencement d'étanchéité (21), est disposée à l'intérieur de l'élément formant enveloppe (1).

10. Dispositif selon la revendication 9, **caractérisé en ce que** la plaque frontale (14), lorsque l'embout (25) est poussé en position dans la deuxième zone d'introduction (3), fait saillie au-dessus de la face antérieure de l'élément formant enveloppe (1) se situant dans la première zone d'introduction (2).

11. Dispositif selon la revendication 9, **caractérisé en ce que** la plaque frontale (14), jusqu'à ce que soit atteinte la position finale de l'embout (25) pour son raccordement à l'autre embout, est disposé derrière la face antérieure de l'élément formant enveloppe (1) se trouvant dans la première zone d'introduction (2) et, une fois la position finale atteinte, fait saillie au-dessus de la face antérieure.
